# EUROPÄISCHE PATENTSCHRIFT

(11) **EP 4 394 157 B1**
(45) Veröffentlichungstag und Bekanntmachung des Hinweises auf die Patenterteilung: **11.06.2025**
(21) Anmeldenummer: 23215756.0
(22) Anmeldetag: 12.12.2023
(51) Int. Cl.: E06B 1/52

(54) **PROFIL MIT INTEGRIERTEM SCHALTELEMENT EINER SCHALTUNG**
PROFILE WITH INTEGRATED CIRCUIT ELEMENT OF A CIRCUIT
PROFILÉ AVEC ÉLÉMENT DE COMMUTATION INTÉGRÉ D'UN CIRCUIT

(30) Priorität: 21.12.2022 DE 202022107136 U
(43) Veröffentlichungstag der Anmeldung: 03.07.2024
(73) Patentinhaber: SCHÜCO International KG, 33609 Bielefeld (DE)
(72) Erfinder: WILKER, Burkhard, 32760 Detmold (DE)
(74) Vertreter: Specht, Peter

(56) Entgegenhaltungen:
- DE-A1- 102007 032 504
- DE-A1- 102009 057 256
- DE-A1- 102015 113 167
- DE-U1- 202005 011 168

## Beschreibung

Die vorliegende Erfindung betrifft ein Profil nach dem Oberbegriff des Anspruchs 1.

Reedschalter, auch Reedkontakte genannt, sind Schaltelemente einer ferromagnetischen Schaltung. Diese Art der Schaltelemente weisen ein Schaltelemente, so z.B. ferromagnetische Schaltzungen auf, welche sich in einem stabförmigen Gehäuse befinden. Bevorzugt ist das Gehäuse dergestalt, dass die Schaltelemente hermetisch dicht gegenüber der Umwelt ummanteln. Entsprechende Gehäusematerialien können z.B. aus Glas oder Kunststoff gefertigt sein.

Die Schaltzungen können über äußere Einflüsse, insbesondere ein Magnetfeld, zur Relativbewegung gegeneinander gebracht werden, so dass sich die Schaltung bei Annäherung eines Magnetfelds schließt. Das Magnetfeld kann durch Permanentmagnete oder Spulen erzeugt werden. Dieses Magnetfeld wird durch ein Auslöseelement der Schaltung erbracht. Ist der Reedschalter als Schaltelement in einem ersten Profil eines Fensters integriert, so kann das Auslöseelement in einem zweiten Profil des Fensters vorgesehen sein, wobei eines der Profile relativ zum anderen Profil des Fensters bewegbar gelagert ist, derart, dass die beiden Profile bei Annäherung den Schaltungszustand des Schaltelements ändern.

Reedkontakte sind im Fensterbau an sich bekannt. Sie sind einstückig ausgebildet und weisen dabei ein Kontaktkabel auf und einen Endanschlag an dem Gehäuse des Reedkontakts auf. Problematisch bei Reedkontakten ist die Montage innerhalb eines Profils. Die Kabel von Reedkontakten können mehrere Meter Länge aufweisen. Bei der Montage vor Ort müssen die Kontaktkabel der Reedkontakte zunächst durch eine Bohrung des Profils geführt werden. Sodann wird das Reedkontakt-Gehäuse bis zum Endanschlag in die Bohrung des Profils eingeführt. Das Durchfädeln des Kontaktkabels nimmt bei der Vor-Ort-Montage viel Zeit in Anspruch, bei welchem der Fensterflügel ggf. gestützt werden muss.

Ein weiterer Ansatz war es, die Reedkontakte werksseitig vorzumontieren. Dabei besteht sowohl der notwendige Raum als auch ggf. Montagehilfen, um die Kontaktkabel der Reedkontakte etwas schneller durch das Fensterprofil zu führen. Problematisch hierbei ist es, dass die Kontaktkabel beim anschließenden Transport durch das Fenstergewicht abscheren können oder in anderer Weise beschädigt werden können.

Die DE 10 2007 032 504 A1 offenbart einen zweiteiligen Reedkontakt mit einer Fassung und einem austauschbaren Sensorelement, wobei die Fassung ebenfalls durch Durchfädeln des Kabels durch das Profil erfolgen muss. Zwar ist das Sensorelement austauschbar, allerdings ist die Montagereinfolge und die Einführung des Kabels durch die Sensorfassung und den daran angeordneten Anschlagkragen in das Profil festgelegt.

Ausgehend von der vorgenannten Aufgabenstellung ist es die Aufgabe der vorliegenden Erfindung ein Profil mit integriertem Schaltelement bereitzustellen, welches wesentlich einfachere und schnellere Art und Weise in einem Profilkorpus des Profils montierbar ist.

Die vorliegende Erfindung löst diese Aufgabe durch den ein Profil mit den Merkmalen des Anspruchs 1.

Das erfindungsgemäße Profil kann für Türen, Fenster, Blendrahmen oder auch in Fassadenkonstruktionen eingesetzt werden.

Das Profil weist einen Profilkorpus auf. Dieser Profilkorpus umfasst eine Öffnung, beispielsweise die Öffnung einer Bohrung. Weiter weist das Profil eine in der Öffnung eingesetzte Anordnung aus einem Schaltelement. Das Schaltelement ist Teil einer Schaltung, insbesondere einer Schaltung mit magnetisch ausgelöster Schaltfunktion. Die Schaltung erstreckt sich typischerweise über mehrere Profile. Dabei kann das Schalelement ein Reedkontakt sein, welcher durch einen Magneten eines weiteren Profils, welches relativ zum erfindungsgemäßen Profil bewegbar ist, wobei der Reedkontakt bei Annäherung des Magneten ausgelöst wird. Selbstverständlich kann auch das erfindungsgemäße Profil beweglich gegenüber dem Profil mit dem Magneten sein.

Im Unterschied zum Stand der Technik weist die in der Öffnung eingesetzte Anordnung zusätzlich zum Schaltelement ein separates Haltemittel mit einem Linearanschlag auf. Dieser dient zur Begrenzung der Linearbewegung der Anordnung innerhalb der Öffnung des Profilkorpus.

Erfindungsgemäß weist das Schaltelement ein endständiges Kabel auf. Das Haltemittel ist dergestalt ausgebildet, dass es aus senkrechter Richtung zur Längsrichtung des Kabels montierbar ist. Hierfür weist das Haltemittel, insbesondere die Ankerhülse, einen Schlitz auf, welcher sich über die gesamte Länge des Haltemittels erstreckt. Durch Aufweiten des Schlitzes kann das Kabel in den Innenbereich des Haltemittels bzw. der Ankerhülse positioniert werden, ohne dass es endständig durch das Haltemittel eingeführt und über die ganze Kabellänge durchgefädelt werden muss.

Somit kann das Schaltelement rückseitig durch die Öffnung geführt werden. Sodann kann es vorderseitig mit dem Halteelement zu der Anordnung verbunden werden und schließlich in der Öffnung platziert werden. Ein Durchfädeln von Kabeln mit ihrer gesamten Kabellänge durch die Öffnung ist bei dieser Variante nicht notwendig und ermöglicht dadurch eine entscheidende Montageerleichterung.

Vorteilhafte Ausgestaltungen der Erfindung sind Gegenstand des Unteranspruchs.

Das separate Haltemittel kann vorzugsweise als Ankerhülse ausgebildet sein, wobei die Ankerhülse einen Hülsenkörper, vorzugsweise in zylindrischer Ausgestaltung, und den Linearanschlag aufweist. Hülsenkörper und Linearanschlag sind bei der Ankerhülse einstückig miteinander verbunden. Der Linearanschlag ist dabei vorzugsweise endständig zum Hülsenkörper angeordnet. Dadurch ragt die Anordnung vorteilhaft lediglich mit sehr geringen Überstand gegenüber dem Profilkorpus hervor.

Der Linearanschlag kann vorteilhaft als Ringscheibe ausgebildet sein, um eine gleichmäßige Kraftverteilung und Auflage zu erreichen.

Die Ankerhülse kann form- oder kraftschlüssig mit dem Schaltelement zu der Anordnung verbunden sein. Dies entspricht im Wesentlichen der Funktion eines üblichen Spreizdübels.

Das Haltemittel, insbesondere die Ankerhülse, kann zur Verstärkung der Verankerung des Haltemittels in der Öffnung des Profilkorpus als Spreizhülse mit zumindest einem zweiten nicht-durchgehenden Schlitz ausgebildet sein.

Zur Verbesserung der Spreizwirkung weist der zweite Schlitz eine besonders große Länge auf. Daher ist es von Vorteil, wenn sich der zweite Schlitz über zumindest 80% des Hülsenkörpers erstreckt.

Der maximale Durchmesser des Schaltelements bzw. deren radiale Erstreckung ist kleiner als Durchmesser einer Bohrung des Profilkorpus in welcher die Anordnung aus Haltemittel und Schaltelement angeordnet ist oder die der Bohrung zugeordneten Öffnung im Profilkorpus, in welcher die Anordnung aus Haltemittel und Schaltelement angeordnet ist.

Das Schaltelement kann vorteilhaft einen Linearanschlag aufweisen, zur Begrenzung der Linearbewegung des Schaltelements gegenüber dem Haltemittel, insbesondere der Ankerhülse.

Das Schaltelement kann ein endständiges Rastmittel aufweisen. Dieses kann vorzugsweise als ein Rastring, besonders bevorzugt einen Rastring mit zumindest einem die Ringkontur unterbrechenden Schlitz ausgebildet sein, um eine besonders sichere und zugleich lösbare Befestigung des Schaltelements durch das Haltemittel zu ermöglichen. Das Rastmittel dient dabei zur Begrenzung der Linearbewegung des Schaltelements gegenüber dem Haltemittel bzw. der Ankerhülse.

Das Schaltelement kann vorteilhaft innerhalb des Haltemittels, vorzugsweise der Ankerhülse, durch das Rastmittel, insbesondere durch den Rastring und den Linearanschlag festgelegt, vorzugsweise lösbar festgelegt, sein.

Das Haltemittel, insbesondere die Ankerhülse, kann zur Verstärkung der radialen Verklemmung oder des Formschlusses radiale Rippen aufweisen, welche radial gegenüber dem Hülsenkörper hervorstehen.

Der Linearanschlag der Ankerhülse kann vorteilhaft mit dem Linearanschlag des Schaltelements bündig abschließen, so dass sich eine gemeinsame Stirnfläche der Anordnung aus Ankerhülse und Schaltelement ausbildet. Dadurch stellt der nach außen hervorstehende Bereich der Anordnung gegenüber dem Profilkorpus nur ein geringes Hindernis dar und zugleich kann sich nur wenig Schmutz in diesem Bereich ansammeln.

Die Anordnung kann vorteilhaft eine separate Abdeckkappe aufweisen, welche vorzugsweise über der Stirnfläche angeordnet ist. Dadurch kann eine Schädigung des Linearanschlags und damit ein Verrutschen des Schaltelements innerhalb des Profilkorpus vorteilhaft verhindert werden.

Die vorliegende Erfindung wird nachfolgend anhand mehrerer Ausführungsbeispiele und mittels der beigefügten Zeichnungen näher beschrieben. Es zeigen:
- Fig. 1: Perspektivansicht auf die Bauteile eines erfindungsgemäßen Profils beim Ausführen von zweier Montageschritte;
- Fig. 2: Perspektivansicht auf die Bauteile des Profils beim Ausführen eines dritten Montageschritts;
- Fig. 3: vergrößerte Perspektivansicht auf eine Ankerhülse als eines der vorgenannten Bauteile; und
- Fig. 4: Schnittansicht auf das erfindungsgemäße Profil.

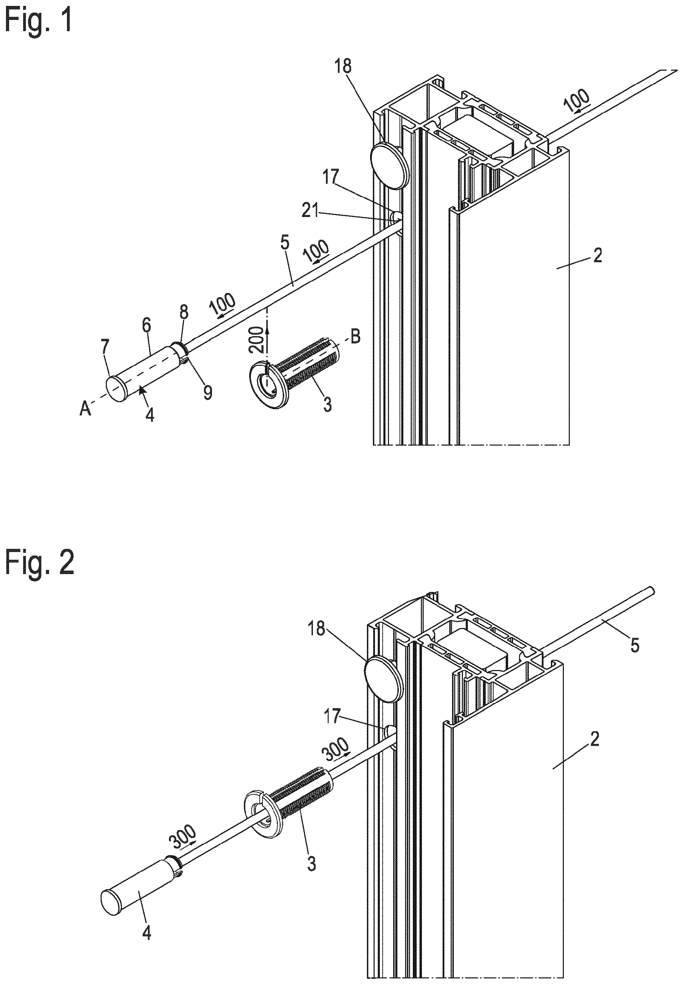

Fig. 1-4 zeigen die Bauteile eines erfindungsgemäßen Profils 1 mit integriertem Schaltelement 4 mit einer Längsachse A. Dieses Schaltelement 4 ist vorzugsweise als sogenannter Reedkontakt ausgebildet. Durch den Reedkontakt sind u.a. Einbruchssicherungen, Öffnungssicherungen und eine Überwachung des Öffnungszustands im Rahmen eines Gebäudemanagements realisierbar.

Das Profil weist einen Profilkorpus 2 mit einer Bohrung 21 zur Aufnahme einer Anordnung aus Schaltelement 4 und einer Ankerhülse 3 in den Profilkorpus 2 und eine Öffnung 17 zum Zugang in die Bohrung 21 auf. Die Ankerhülse 3 weist eine Längsachse B auf, welche im montierten Zustand koaxial zur Längsachse A des Schaltelements 4 angeordnet ist.

Das Schaltelement 4 weist einen stabförmigen Korpus 6 mit einer Außenmantelfläche auf. Dies kann vorzugsweise eine Zylindermantelfläche sein, aber auch eine Quadermantelfläche oder Prismenmantelfläche oder dergleichen.

Vorzugsweise endständig weist das Schaltelement 4 einen Linearanschlag 7 zur Begrenzung der Linearbewegung des Schaltelements 4 entlang ihrer Längsachse bei ihrer Relativbewegung gegenüber der Ankerhülse 3 beim Einführen des Schaltelements in eine Hülsenöffnung 16.

Die Ankerhülse 3 weist einen Hülsenkörper 19, vorzugsweise in zylindrischer Ausbildung, und demgegenüber radial-hervorstehende Rippen 14 zur Verbesserung des Kraft- und/oder Reibschlusses zwischen dem Profilmaterial und der Ankerhülse. Bekannterweise vergrößern derartige Rippen bei Dübeln und dergleichen die Radialkräfte auf das anliegende Material, hier das Profilmaterial.

Die Ankerhülse 3 ist als Spreizhülse ausgebildet mit zwei in Längsrichtung verlaufenden Schlitzen 12 und 13. Eine der Schlitze 12 erstreckt sich durchgehend über die gesamte Länge der Ankerhülse, so dass die Hülse bereichsweise offen ist und dadurch ein Kabel 5 des Schaltelements durch den Schlitz 12 in den Hülseninnenraum geführt werden kann.

Weiter weist die Ankerhülse einen vorzugsweise endständigen Linearanschlag 10 am Hülsenkörper 19 zum Anschlag mit der Öffnung 17 der Bohrung 21 auf. Der Linearanschlag 10 kann als ringscheibenförmiges Kopfsegment ausgebildet sein, welches radial gegenüber dem Hülsenkörper 19 hervorsteht.

Der besagte Schlitz 12 verläuft als radiales Segment 11 insbesondere auch durch den Linearanschlag 10. Der zweite Schlitz 13 verläuft lediglich durch den Hülsenkörper 19 und erstreckt sich vorzugsweise über mehr als 80%, vorzugsweise zwischen 81-97%, der Länge des besagten Hülsenkörpers. Die lange Spreizzone der Ankerhülse 3 wirkt einer geringen Druckfestigkeit entgegen.

Der Hülsenkörper 19 definiert einen geringeren Innendurchmesser als die endständige Hülsenöffnung 16, so dass sich daraus eine gestufte Öffnungsgeometrie mit einer Anschlagkante 15 ergibt, welche zugleich eine endständige Stirnfläche des Hülsenkörpers 19 ist. Schließlich weist die Ankerhülse 3 an der endständig dem Linearanschlag 10 gegenüberliegenden Seite eine Innenführungskante 20 auf, welche eine zusätzliche Führung und ggf. zusätzliche kraftschlüssige Festlegung zwischen der Ankerhülse 3 und dem Schaltelement erlaubt.

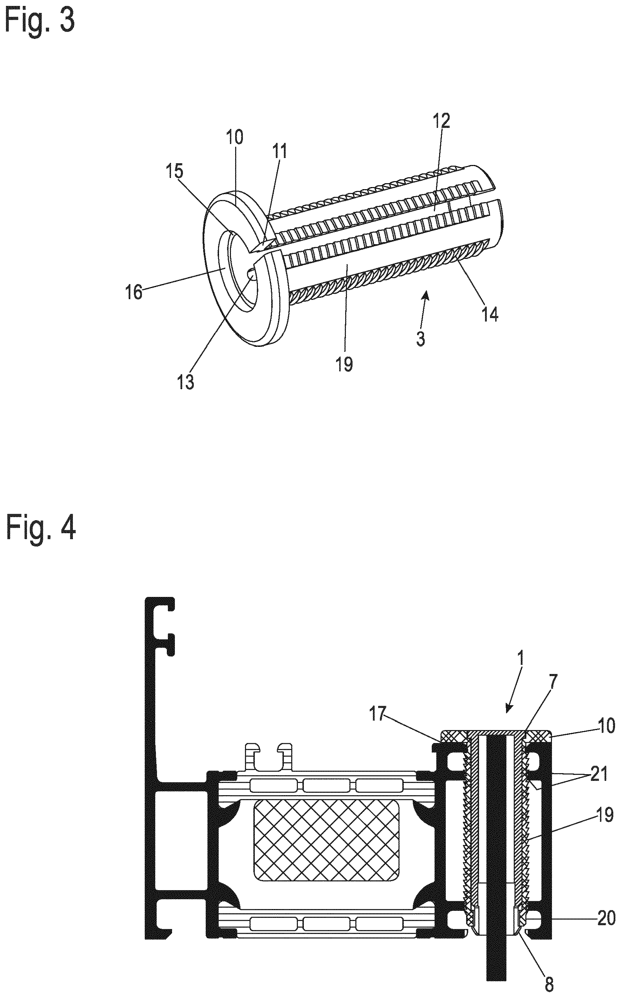

Im montierten Zustand liegt der Linearanschlag 7 auf der Anschlagkante 15 auf, so dass eine Blockierung der Linearbewegung des Schaltelements 4 gegenüber der Ankerhülse 3 in eine erste Richtung erreicht wird. Dies ist insbesondere in Fig. 4 erkennbar.

Weiter weist das Schaltelement 4, ebenfalls vorzugsweise endständig, Haltemittel 8, insbesondere Rastmittel auf, welche mit einer korrespondierenden Ausnehmung oder Kante der Ankerhülse durch Klemmschluss oder bevorzugt durch Formschluss verbunden sind. Dadurch wird eine Blockierung der Linearbewegung des Schaltelements 4 gegenüber der Ankerhülse 3 in eine zweite Richtung erreicht und das Schaltelement 4 liegt linear fixiert, vorzugsweise lösbar fixiert, in der Ankerhülse 3 ein. Das Haltemittel 8 ist insbesondere als Rastring ausgebildet mit einer umlaufenden Randnase. Der Rastring 8 ist seinerseits durch einen Schlitz 9 oder mehrere Schlitze in Längsrichtung zur Längsachse A zur besseren Verformbarkeit des Rastrings in radialer Richtung unterbrochen. Der Rastring 8 ist gegenüber dem Korpus 6 vorzugsweise zurückgesetzt und ebenfalls vorzugsweise endständig am Korpus 6 angeordnet. Weiterhin kann der Rastring 8 mit der Innenführungskante 20 der Ankerhülse 3 verrasten oder verklemmen.

Wie schon zuvor erläutert geht ein vergleichsweise langes Kontaktkabel 5 vom Schaltelement 4 weg.

Zur Montage wird in einem ersten Schritt 100 das Schaltelement 4 samt Kabel 5 durch die Bohrung 21 gefädelt. Hierin liegt bereits ein wesentlicher Unterschied zum Stand der Technik, in welchem bisher nur das rückseitige Kabel 5 durch die Bohrung 21 gefädelt wurde und der Reedkontakt bis zum Anschlag in der Bohrung 21 positioniert wurden. Dabei ist die radiale Dimensionierung des Schaltelements 4 kleiner als der Öffnungsquerschnitt der Bohrung.

Sodann folgt in einem zweiten Schritt 200 das Durchführen des Kabels 5 aus senkrechter Richtung durch den Schlitz 12. Dieser kann ggf. geweitet werden. Hierfür besteht die Ankerhülse 3 aus einem spreizbaren Kunststoffmaterial, wie es z.B. bei handelsüblichen Spreizdübeln genutzt wird. Besonders bevorzugt ist hierbei ein Polyamid, insbesondere Nylon.

Wie aus den Figuren erkennbar, ist das Haltemittel in Schritt 200 aus senkrechter Richtung zur Längsrichtung des Kabels 5 montierbar ausgebildet.

Sodann wird die Ankerhülse 3 über das Schaltelement 4 gestülpt oder aber das Schaltelement 4 wird in die Ankerhülse 3 gesteckt. Die Ankerhülse weist bereichsweise eine breitere radiale Dimensionierung, insbesondere im Bereich des Linearanschlags 10, auf als der Öffnungsdurchmesser 17 der Bohrung 21. Somit schlägt die Anordnung aus Ankerhülse 3 und Schaltelement 4 am Profilkorpus 2 an.

Schließlich wird die Anordnung in die Bohrung hineingesteckt. Die Anordnung wird durch die Rippen 14 und den Linearanschlag 10 in Position gehalten. Auf den Linearanschlag 10 ist sodann eine Abdeckkappe 18 optional aufsetzbar.

Diese Form der Montage vermindert den Montageaufwand des Durchfädelns mehrerer Meter an Kabel 5 durch entgegengesetztes Durchstecken und anschließendes Befestigen des Schaltelements 4. Die Montage kann in kürzester Zeit ohne weitere Hilfsmittel auch vor Ort, also am Ort der Fenstermontage, durchgeführt werden.

### Bezugszeichenliste

- 1.: Profil
- 2.: Profilkorpus
- 3.: Ankerhülse
- 4.: Schaltelement
- 5.: Kontaktkabel
- 6.: Korpus (Schaltelement)
- 7.: Linearanschlag (Schaltelement)
- 8.: Rastring
- 9.: Schlitz
- 10.: Linearanschlag
- 11.: Radiales Segment
- 12.: Schlitz
- 13.: Schlitz
- 14.: Rippen
- 15.: Anschlagkante
- 16.: Hülsenöffnung
- 17.: Öffnung
- 18.: Abdeckkappe
- 19.: Hülsenkörper
- 20.: Innenführungskante
- 21.: Bohrung

- 100: erster Schritt (Durchfädeln)
- 200: zweiter Schritt (Hülse ums Kabel)
- 300: dritter Schritt (Einziehen)

- A: Längsachse (Schaltelement)
- B: Längsachse (Ankerhülse)

## Patentansprüche

1. Profil (1) für Türen, Fenster, Blendrahmen oder Fassadenkonstruktionen mit einem Profilkorpus (2) umfassend eine Öffnung (17) und eine darin eingesetzte Anordnung aus einem Schaltelement (4) einer Schaltung und einem separaten Haltemittel mit einem Linearanschlag (10) zur Begrenzung der Linearbewegung der Anordnung innerhalb der Öffnung (17) des Profilkorpus (2), **dadurch gekennzeichnet, dass** das Schaltelement (4) ein endständiges Kabel (5) aufweist und dass das Haltemittel aus senkrechter Richtung zur Längsrichtung des Kabels (5) montierbar ausgebildet ist und
**dass** das Haltemittel, insbesondere die Ankerhülse (3), einen Schlitz (12) aufweist, welcher sich über die gesamte Länge des Haltemittels erstreckt, so dass das Haltemittel bereichsweise offen ist und dadurch das Kabel durch den Schlitz in den Innenbereich des Haltemittels aus einer zur Längsrichtung des Kabels senkrechten Richtung geführt werden kann.

2. Profil (1) nach Anspruch 1, **dadurch gekennzeichnet, dass** das separate Haltemittel als Ankerhülse (3) ausgebildet ist, wobei die Ankerhülse (3) einen Hülsenkörper (19), vorzugsweise in zylindrischer Ausgestaltung, und den Linearanschlag (10), vorzugsweise endständig zum Hülsenkörper (19), aufweist.

3. Profil (1) nach Anspruch 1 oder 2, **dadurch gekennzeichnet, dass** der Linearanschlag (10) als Ringscheibe ausgebildet ist.

4. Profil (1) nach einem der vorhergehenden Ansprüche, **dadurch gekennzeichnet, dass** das Schaltelement (4) als ein Reedkontakt ausgebildet ist.

5. Profil (1) nach einem der vorhergehenden Ansprüche, **dadurch gekennzeichnet, dass** die Ankerhülse (3) form- oder kraftschlüssig mit dem Schaltelement (4) zu der Anordnung verbunden ist.

6. Profil (1) nach einem der vorhergehenden Ansprüche, **dadurch gekennzeichnet, dass** das Haltemittel, insbesondere die Ankerhülse (3), als Spreizdübel bzw. Spreizhülse ausgebildet ist

7. Profil (1) nach einem der vorhergehenden Ansprüche, **dadurch gekennzeichnet, dass** das Haltemittel, insbesondere die Ankerhülse (3), mit zumindest einem zweiten nicht-durchgehenden Schlitz (13) ausgebildet ist.

8. Profil (1) nach einem der vorhergehenden Ansprüche, **dadurch gekennzeichnet, dass** sich der zweite Schlitz (13) über zumindest 80% des Hülsenkörpers (19) erstreckt.

9. Profil (1) nach einem der vorhergehenden Ansprüche, **dadurch gekennzeichnet, dass** der maximale Durchmesser des Schaltelements (4) kleiner als Durchmesser eine Bohrung (21) oder die der Bohrung (21) zugeordneten Öffnung (17) im Profilkorpus (2), in welcher die Anordnung aus Haltemittel und Schaltelement (4) angeordnet ist.

10. Profil (1) nach einem der vorhergehenden Ansprüche, **dadurch gekennzeichnet, dass** das Schaltelement (4) einen Linearanschlag (7) aufweist, zur Begrenzung der Linearbewegung des Schaltelements (4) gegenüber dem Haltemittel, insbesondere der Ankerhülse (3).

11. Profil (1) nach einem der vorhergehenden Ansprüche, **dadurch gekennzeichnet, dass** das Schaltelement (4) ein endständiges Rastmittel, vorzugsweise einen Rastring (7), besonders bevorzugt einen Rastring (7) mit zumindest einem die Ringkontur unterbrechenden Schlitz (9), zur Begrenzung der Linearbewegung des Schaltelements (4) gegenüber dem Haltemittel aufweist.

12. Profil (1) nach einem der vorhergehenden Ansprüche, **dadurch gekennzeichnet, dass** das Schaltelement (4) innerhalb des Haltemittels, vorzugsweise der Ankerhülse (3), durch das Rastmittel, insbesondere den Rastring (9) und den Linearanschlag (7) festgelegt, vorzugsweise lösbar festgelegt, ist.

13. Profil (1) nach einem der vorhergehenden Ansprüche, **dadurch gekennzeichnet, dass** das Haltemittel, insbesondere die Ankerhülse (3), radiale Rippen (14) aufweist, welche radial gegenüber dem Hülsenkörper (19) hervorstehen.

14. Profil (1) nach einem der vorhergehenden Ansprüche, **dadurch gekennzeichnet, dass** der Linearanschlag (10) der Ankerhülse (3) mit dem Linearanschlag (7) des Schaltelements (4) bündig abschließt, so dass sich eine gemeinsame Stirnfläche der Anordnung aus Ankerhülse (3) und Schaltelement (4) ausbildet.

15. Profil (1) nach einem der vorhergehenden Ansprüche, **dadurch gekennzeichnet, dass** die Anordnung eine separate Abdeckkappe aufweist, welche vorzugsweise über der Stirnfläche angeordnet ist.

## Claims

1. Profile (1) for doors, windows, frames or façade constructions having a profile body (2) comprising an opening (17) and an arrangement inserted therein consisting of a switching element (4) of a circuit and a separate retaining means with a linear stop (10) for limiting the linear movement of the arrangement within the opening (17) of the profile body (2), **characterized in that** the switching element (4) has a terminal cable (5) and **in that** the retaining means is designed to be mounted at a right angle to the longitudinal direction of the cable (5) and **in that** the retaining means, in particular the anchor sleeve (3), has a slot (12) which extends over the entire length of the retaining means, so that the retaining means is open in some areas and the cable can thus be guided through the slot into the interior region of the retaining means from a direction perpendicular to the longitudinal direction of the cable.

2. Profile (1) according to claim 1, **characterized in that** the separate retaining means is designed as an anchor sleeve (3), wherein the anchor sleeve (3) has a sleeve body (19), preferably in a cylindrical design, and the linear stop (10), preferably at the end of the sleeve body (19).

3. Profile (1) according to claim 1 or 2, **characterized in that** the linear stop (10) is designed as a ring disk.

4. Profile (1) according to one of the preceding claims, **characterized in that** the switching element (4) is designed as a reed contact.

5. Profile (1) according to one of the preceding claims, **characterized in that** the anchor sleeve (3) is connected to the switching element (4) in a form-fitting or force-fitting manner to form the arrangement.

6. Profile (1) according to one of the preceding claims, **characterized in that** the retaining means, in particular the anchor sleeve (3), is designed as an expansion dowel or expansion sleeve.

7. Profile (1) according to one of the preceding claims, **characterized in that** the retaining means, in particular the anchor sleeve (3), is designed with at least a second non-continuous slot (13).

8. Profile (1) according to one of the preceding claims, **characterized in that** the second slot (13) extends over at least 80% of the sleeve body (19).

9. Profile (1) according to one of the preceding claims, **characterized in that** the maximum diameter of the switching element (4) is smaller than the diameter of a bore (21) or the opening (17) associated with the bore (21) in the profile body (2) in which the arrangement of retaining means and switching element (4) is arranged.

10. Profile (1) according to one of the preceding claims, **characterized in that** the switching element (4) has a linear stop (7) for limiting the linear movement of the switching element (4) relative to the retaining means, in particular the anchor sleeve (3).

11. Profile (1) according to one of the preceding claims, **characterized in that** the switching element (4) has an end locking means, preferably a locking ring (7), particularly preferably a locking ring (7) having at least one slot (9) interrupting the ring contour, for limiting the linear movement of the switching element (4) relative to the retaining means.

12. Profile (1) according to one of the preceding claims, **characterized in that** the switching element (4) is fixed, preferably detachably fixed, within the retaining means, preferably the anchor sleeve (3), by the locking means, in particular the locking ring (9) and the linear stop (7).

13. Profile (1) according to one of the preceding claims, **characterized in that** the retaining means, in particular the anchor sleeve (3), has radial ribs (14) which project radially relative to the sleeve body (19).

14. Profile (1) according to one of the preceding claims, **characterized in that** the linear stop (10) of the anchor sleeve (3) is flush with the linear stop (7) of the switching element (4), so that a common end face of the arrangement consisting of the anchor sleeve (3) and the switching element (4) is formed.

15. Profile (1) according to one of the preceding claims, **characterized in that** the arrangement has a separate cover cap, which is preferably arranged over the end face.

## Revendications

1. Profilé (1) pour portes, fenêtres, châssis dormants ou constructions de façade, avec un corps de profilé (2) comprenant une ouverture (17) et une disposition insérée dans celle-ci, composée d'un élément de commutation (4) d'un circuit et d'un moyen de maintien séparé avec une butée linéaire (10) pour limiter le mouvement linéaire de la disposition dans l'ouverture (17) du corps de profilé (2), **caractérisé en ce que** l'élément de commutation (4) comporte un câble d'extrémité (5) et **en ce que** le moyen de maintien est conformé pour pouvoir être monté à partir d'une direction perpendiculaire à la longueur du câble (5) et **en ce que** le moyen de maintien, en particulier la douille d'ancrage (3), comporte une fente (12) qui s'étend sur toute la longueur du moyen de maintien, de sorte que le moyen de maintien est ouvert par zones et le câble peut ainsi être introduit à travers la fente dans l'intérieur du moyen de maintien à partir d'une direction perpendiculaire à la longueur du câble.

2. Profilé (1) selon la revendication 1, **caractérisé en ce que** le moyen de maintien séparé est conformé comme une douille d'ancrage (3), laquelle douille d'ancrage (3) comporte un corps de douille (19), de préférence de conformation cylindrique, et la butée linéaire (10), de préférence à l'extrémité par rapport au corps de douille (19).

3. Profilé (1) selon la revendication 1 ou 2, **caractérisé en ce que** la butée linéaire (10) est conformée comme une rondelle annulaire.

4. Profilé (1) selon l'une des revendications précédentes, **caractérisé en ce que** l'élément de commutation (4) est conformé comme un contact à lames souples.

5. Profilé (1) selon l'une des revendications précédentes, **caractérisé en ce que** la douille d'ancrage (3) est reliée par engagement positif ou friction avec l'élément de commutation (4) pour former la disposition.

6. Profilé (1) selon l'une des revendications précédentes, **caractérisé en ce que** le moyen de maintien, en particulier la douille d'ancrage (3), est conformé comme une cheville à expansion ou une douille à expansion.

7. Profilé (1) selon l'une des revendications précédentes, **caractérisé en ce que** le moyen de maintien, en particulier la douille d'ancrage (3), est doté d'au moins une deuxième fente non traversante (13).

8. Profilé (1) selon l'une des revendications précédentes, **caractérisé en ce que** la deuxième fente (13) s'étend sur au moins 80 % du corps de douille (19).

9. Profilé (1) selon l'une des revendications précédentes, **caractérisé en ce que** le diamètre maximal de l'élément de commutation (4) est plus petit que le diamètre d'un perçage (21) ou d'une ouverture (17) associée au perçage (21) dans le corps de profilé (2), dans lequel ou laquelle la disposition composée du moyen de maintien et de l'élément de commutation (4) est disposée.

10. Profilé (1) selon l'une des revendications précédentes, **caractérisé en ce que** l'élément de commutation (4) comporte une butée linéaire (7) pour limiter le mouvement linéaire de l'élément de commutation (4) par rapport au moyen de maintien, en particulier à la douille d'ancrage (3).

11. Profilé (1) selon l'une des revendications précédentes, **caractérisé en ce que** l'élément de commutation (4) comporte un moyen d'enclenchement d'extrémité, de préférence une bague d'enclenchement (7), en particulier une bague d'enclenchement (7) avec au moins une fente (9) interrompant son périmètre annulaire, afin de limiter le mouvement linéaire des l'élément de commutation (4) par rapport au moyen de maintien.

12. Profilé (1) selon l'une des revendications précédentes, **caractérisé en ce que** l'élément de commutation (4) est fixé, de préférence fixé d'une façon pouvant être défaite, à l'intérieur du moyen de maintien, de préférence de la douille d'ancrage (3), par le moyen d'enclenchement, en particulier la bague d'enclenchement (9) et la butée linéaire (7).

13. Profilé (1) selon l'une des revendications précédentes, **caractérisé en ce que** le moyen de maintien, en particulier la douille d'ancrage (3), comporte des nervures radiales (14) qui dépassent dans le sens radial par rapport au corps de douille (19).

14. Profilé (1) selon l'une des revendications précédentes, **caractérisé en ce que** la butée linéaire (10) de la douille d'ancrage (3) se termine en affleurement avec la butée linéaire (7) de l'élément de commutation (4), de façon à former une face frontale commune de la disposition composée de la douille d'ancrage (3) et de l'élément de commutation (4).

15. Profilé (1) selon l'une des revendications précédentes, **caractérisé en ce que** la disposition comporte un capuchon de couverture séparé, qui est de préférence disposé par-dessus la face frontale.
